# EUROPÄISCHE PATENTSCHRIFT

(11) **EP 0 539 415 B1**
(45) Veröffentlichungstag und Bekanntmachung des Hinweises auf die Patenterteilung: **04.05.1994**
(21) Anmeldenummer: 91912552.6
(22) Anmeldetag: 15.07.1991
(51) Int. Cl.: F16L 55/18

(54) **VORRICHTUNG UND VERFAHREN ZUM AUFTRENNEN EINES ROHRES AM INNENUMFANG**
DEVICE AND PROCESS FOR CUTTING OFF A PIPE FROM THE INSIDE
DISPOSITIF ET PROCEDE POUR LE SECTIONNEMENT D'UN TUBE PAR L'INTERIEUR

(30) Priorität: 16.07.1990 DE 4022543
(43) Veröffentlichungstag der Anmeldung: 05.05.1993
(73) Patentinhaber: SIEMENS AKTIENGESELLSCHAFT, 80333 München (DE)
(72) Erfinder: HEHN, Winfried, D-8521 Grossenseebach (DE)
(86) Internationale Anmeldenummer: DE9100577
(87) Internationale Veröffentlichungsnummer: WO9201889

(56) Entgegenhaltungen:
- EP-A- 0 029 343
- WO-A-83/03457
- GB-A- 2 093 380

## Beschreibung

### Vorrichtung zum Auftrennen eines Rohres am Innenumfang und Verfahren zum Betreiben dieser Vorrichtung

Die Erfindung bezieht sich auf eine Vorrichtung zum Auftrennen eines Rohres am Innenumfang und auf ein Verfahren zum Betreiben dieser Vorrichtung.

Bei Reparaturarbeiten an Rohren der Speisewasserleitung innerhalb eines Dampferzeugers kann es erforderlich sein, Teile des Rohrleitungssystems, beispielsweise den Stutzen des Speisewasserverteilers, komplett auszubauen. Dazu ist es notwendig, den Speisewasserverteilerstutzen von den Verteilerrohren durch einen mechanischen Schneidvorgang, beispielsweise durch Sägen, abzutrennen. Aufgrund der beengten räumlichen Verhältnisse innerhalb des Dampferzeugers ist es notwendig, diese Trennung mit einer Vorrichtung durchzuführen, die in das Innere der vom Stutzen beispielsweise T-förmig abgezweigten Verteilerrohre eingeführt werden kann. Das Aufsägen von Rohren mit einem Kreissägeblatt ist jedoch stets mit der Gefahr verbunden, daß sich das Sägeblatt verkantet und die Vorrichtung nur unter erheblichem Aufwand aus dem Rohrinneren geborgen werden kann.

Aus der EP-A2-00 29 343 und WO 83/03457 sind Vorrichtungen zum Arbeiten der Innenoberfläche von Rohren, insbesondere zum Ausfräsen von Einlauföffnungen einer in eine ausgekleidete Rohrleitung mündenden Anschlußleitung, bekannt, bei der ein in der Rohrleitung abstützbarer verfahrbarer Schlitten einen Fräskopf trägt. Neben einem Motor zum Antrieb des Fräswerkzeuges sind auch die zur Zustell- und Vorschubbewegung des Fräskopfes erforderlichen Antriebseinheiten am Schlitten angeordnet. Dadurch wird eine kompakte Bauweise der bekannten Vorrichtungen erschwert und ein Einsatz in Rohren mit kleinem Durchmesser ist nicht möglich.

Der Erfindung liegt nun die Aufgabe zugrunde, eine Vorrichtung zum Auftrennen eines Rohres am Innenumfang anzugeben, mit der die vorstehend genannten Nachteile vermieden sind, und die insbesondere für den Einsatz in Rohren mit geringer Nennweite geeignet ist. Außerdem soll ein Verfahren zum Betreiben dieser Vorrichtung angegeben werden.

Die genannte Aufgabe wird erfindungsgemäß mit einer Vorrichtung gelöst, die folgende Merkmale umfaßt:
a) Die Vorrichtung umfaßt einen in das Rohr einführbaren und innerhalb des Rohres verfahrbaren und an der Rohrinnenwand feststellbaren Manipulator,
b) der Manipulator enthält einen senkrecht zur Rohrachse zustellbaren und um die Rohrachse drehbaren Fräskopf mit einem Fräswerkzeug,
c) zur Übertragung der für die Drehbewegung und die Zustellbewegung des Fräskopfes erforderlichen Antriebsmomente zum Manipulator sind biegsame Wellen vorgesehen.

Durch die Verwendung eines Manipulators mit den vorgenannten Merkmalen, bei dem als Schneidwerkzeug ein Fräswerkzeug vorgesehen ist, kann ein das Bergen des Manipulators erschwerendes Verkanten des Schneidwerkzeuges praktisch nicht mehr auftreten. Das Fräswerkzeug, insbesondere ein Schaftfräser, kann auch unter ungünstigen Umständen, beispielsweise nach einem Verklemmen innerhalb der Rohrwand, durch eine entsprechende Bewegungsumkehr leicht zurückgezogen werden. Dadurch ist der Manipulator stets einfach zu bergen.

Da zur Übertragung der für die Zustellbewegung und die Drehbewegung des Fräskopfes erforderlichen Antriebsmomente zum Manipulator biegsame Wellen vorgesehen sind, kann eine äußerst kompakte Bauweise des Manipulators, die ein Arbeiten auch in Rohren mit geringer Nennweite ermöglicht, realisiert werden. Außerdem ist ein störungsfreier Betrieb auch unter Wasser sichergestellt.

Als Antrieb für die schnelle Rotation des Fräswerkzeuges ist vorzugsweise ein Hydraulikmotor vorgesehen.

Als Fräswerkzeug ist insbesondere ein Schaftfräser geeignet.

In einer bevorzugten Ausgestaltung der Erfindung enthält der Manipulator zum Feststellen innerhalb des Rohres einen Spannzylinder mit mehreren hydraulisch betätigbaren Spannbacken, die gegen die Rohrinnenwand ausgefahren werden.

Eine besonders kompakte Bauweise läßt sich dadurch erreichen, daß für die Zuführung des Druckmediums auf die jeweils über einen Kolben betätigbaren Spannbacken Ringkanäle vorgesehen sind, die in Gestalt einer ringförmigen Nut auf einer vom Spannzylinder umgebenen Lagerbuchse angeordnet sind.

Ein Verfahren gemäß der Erfindung umfaßt die Merkmale von Anspruch 6.

Vorzugsweise wird als Fräswerkzeug ein Schaftfräser verwendet.

Zur weiteren Erläuterung der Erfindung wird auf die Zeichnung verwiesen, in deren Figur 1 eine Vorrichtung gemäß der Erfindung schematisch veranschaulicht ist. Figuren 2 und 3 zeigen eine vorteilhafte Ausgestaltung der Vorrichtung jeweils in einem Teilschnitt parallel zur Längsrichtung.

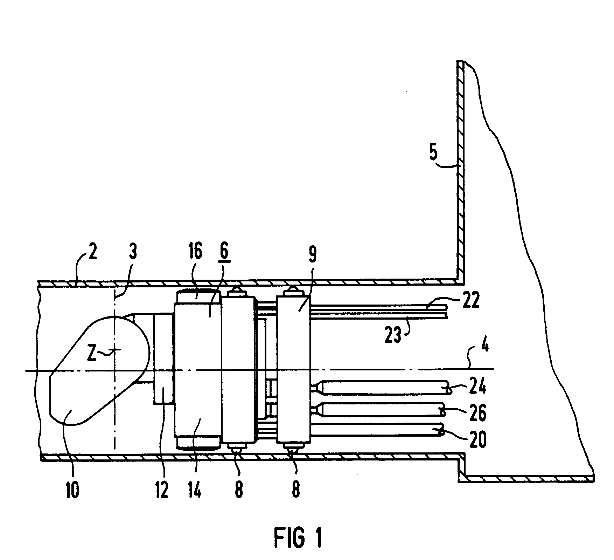

Gemäß **FIG** 1 ist in ein Rohr 2, beispielsweise das von einem Speisewasserverteilerstutzen 5 eines Dampferzeugers abzweigende Verteilerrohr, ein Manipulator 6 eingeführt. Der Manipulator 6 ist innerhalb des Rohres verfahrbar und enthält einen Fräskopf 10. Der Fräskopf 10 ist zum Auftrennen des Rohres 2 am Innenumfang längs einer gestrichelt dargestellten Linie 3 mit einem in der Figur nicht sichtbaren Fräswerkzeug bestückt. Der Fräskopf 10 ist mit einer Zustellvorrichtung 12 versehen, mit der er längs einer senkrecht zur Rohrachse 4 verlaufenden und auf der Zeichenebene senkrecht stehenden Zustellachse Z verschiebbar ist. Die Zustellachse Z schneidet die Zeichenebene außerhalb der Rohrachse 4.

Der Manipulator 6 ist auf Kugelrollen 8 in Richtung der Rohrachse 4 verfahrbar. Um ein Kippen des Manipulators 6 beim Verfahren innerhalb des Rohres 2 zu verhindern, kann ein ebenfalls mit Kugelrollen 8 versehener zusätzlicher Stützring 9 vorgesehen sein. Der Manipulator 6 kann mit Hilfe eines hydraulischen Spannzylinders 14, der mehrere, beispielsweise sechs, radial ausfahrbare Spannbacken 16 enthält, im Rohr 2 festgestellt werden.

Der Fräskopf 10 kann außerdem gemeinsam mit der Zustellvorrichtung 12 innerhalb des feststehenden Spannzylinders 14 um die Rohrachse 4 gedreht werden, so daß das Fräswerkzeug entlang dem Innenumfang des Rohres 2 bewegt werden kann.

Für die zum Fräsen notwendige schnelle Rotation des Fräswerkzeuges ist vorzugsweise ein Hydraulikmotor vorgesehen, der über eine flexible Hydraulikleitung 20 mit einem Druckmedium, beispielsweise Hydrauliköl, versorgt wird. Zwei weitere Hydraulikleitungen 22 und 23 sind zum Spannen bzw. Lösen der jeweils über einen Kolben betätigbaren Spannbacken 16 des hydraulischen Spannzylinders 14 vorgesehen. Die Zuführung des Druckmediums auf die Kolben erfolgt vorzugsweise über jeweils einen Ringkanal, der in Gestalt einer ringförmigen Nut auf der vom Spannzylinder 14 umgebenen Lagerbuchse angeordnet ist.

Die zur Drehbewegung und zur Zustellbewegung des Fräskopfes 10 erforderlichen Antriebsmomente werden durch biegsame Wellen 24 bzw. 26 übertragen, die außerhalb des Rohres 2 oder des Speisewasserverteilerstutzens 5 beispielsweise manuell betätigt werden.

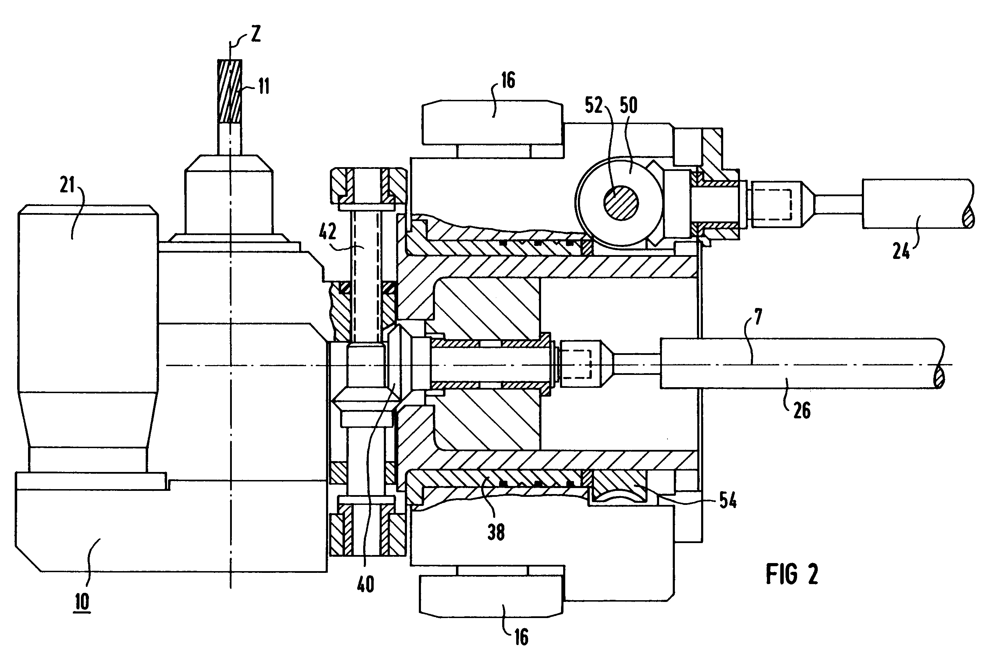

In der vorteilhaften Ausgestaltung entsprechend **FIG 2** wird durch die biegsame Welle 26 ein Kegeltrieb 40 angetrieben. Der Kegeltrieb 40 enthält ein mit der biegsamen Welle 26 drehmomentschlüssig verbundenes Kegelrad, mit dem die Drehbewegung der biegsamen Welle 26 in eine Drehbewegung einer senkrecht zur Drehachse dieses Kegelrades orientierten Gewindespindel 42 umgewandelt wird. Durch die Drehbewegung der Gewindespindel 42 wird der Fräskopf 10 in Richtung der Z-Achse verschoben. Dies ist die Zustellbewegung, mit der das Fräswerkzeug 11 an die Innenfläche des Rohres herangeführt wird.

Zur Drehbewegung des Fräskopfes 10 um die Manipulatorachse 7, die im allgemeinen mit der Rohrachse 4 zusammenfällt, ist ein Schneckenrad 54 und eine Schneckenwelle 52 vorgesehen, die über einen Kegeltrieb 50 von der biegsamen Welle 24 angetrieben werden.

Das Fräswerkzeug 11, vorzugsweise ein Schaftfräser, wird von einem Hydraulikmotor 21 mit nachgeschaltetem Planetengetriebe angetrieben, der die zur spanenden Bearbeitung des Rohres erforderliche hohe Rotationsgeschwindigkeit des Fräswerkzeuges 11 ermöglicht.

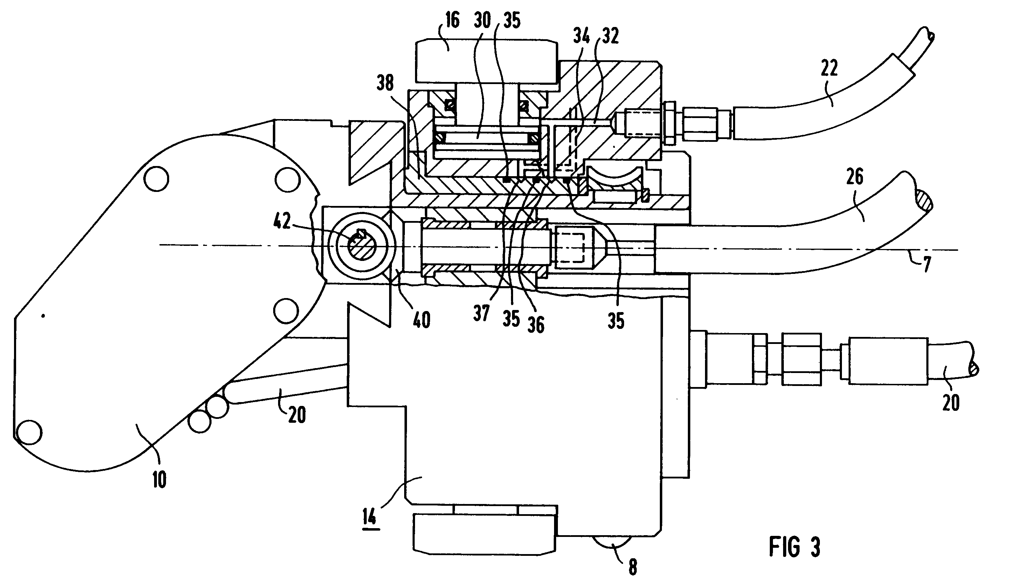

Gemäß **FIG 3** erfolgt die Hydraulikversorgung für die Lösebewegung und die Spannbewegung der Spannbacken 16 des Spannzylinders 14 über Ringkanäle 36 bzw. 37, die in Gestalt einer V-förmigen Nut eine Lagerbuchse 38 des Spannzylinders 14 ring-förmig umgeben. Die Ringkanäle 36 und 37 sind durch jeweils in Nuten 35 der Lagerbuchse 38 angeordnete O-Ringe gegeneinander abgedichtet. Die Ringkanäle 36 und 37 stehen jeweils mit einem Kanal 32 bzw. 34 in Verbindung, der jeweils an eine Hydraulikleitung 22 bzw. an eine in der Figur nicht sichtbare Hydraulikleitung 23 (Figur 1) angeschlossen ist. Über die Ringkanäle 36 und 37 wird die Hydraulikflüssigkeit ringförmig zu den einzelnen Spannkolben 30 des Spannzylinders 14 geleitet. Von den Zylindern der Spannkolben 30 führen jeweils Bohrungen zu den Ringkanälen 36 und 37, die bei Druckbeaufschlagung für die radial nach innen bzw. nach außen gerichtete Bewegung des jeweils mit dem Spannbecken 16 kraftschlüssig verbundenen Spannkolbens 30 sorgen.

Von den Hydraulikleitungen 22 und 23 (Figur 1) ist somit für die Druckversorgung mehrerer Spannkolben 30 nur jeweils eine einzige Zuführung 32 bzw. 34 zu den Ringkanälen 36 bzw. 37 erforderlich. Dies ermöglicht eine besonders kompakte Bauweise.

## Patentansprüche

1. Vorrichtung zum Auftrennen eines Rohres (2) am Innenumfang mit folgenden Merkmalen:
a) Die Vorrichtung umfaßt einen in das Rohr (2) einführbaren und innerhalb des Rohres (2) verfahrbaren und an der Rohrinnenwand feststellbaren Manipulator (6),
b) der Manipulator (6) enthält einen senkrecht zur Rohrachse (4) zustellbaren und um die Rohrachse (4) drehbaren Fräskopf (10) mit einem Fräswerkzeug (11),
**dadurch gekennzeichnet,** daß
c) zur Übertragung der für die Drehbewegung und die Zustellbewegung des Fräskopfes (10) erforderlichen Antriebsmomente zum Manipulator (6) biegsame Wellen (24 bzw. 26) vorgesehen sind.

2. Vorrichtung nach Anspruch 1, **dadurch gekennzeichnet,** daß der Manipulator (6) mit einem Hydraulikmotor (21) zum Antrieb des Fräswerkzeuges (11) versehen ist.

3. Vorrichtung nach einem der vorhergehenden Ansprüche, **dadurch gekennzeichnet,** daß als Fräswerkzeug (11) ein Schaftfräser vorgesehen ist.

4. Vorrichtung nach einem der vorhergehenden Ansprüche, **dadurch gekennzeichnet,** daß zum Feststellen des Manipulators (6) ein Spannzylinder (14) mit mehreren hydraulisch betätigbaren Spannbacken (16) vorgesehen ist.

5. Vorrichtung nach Anspruch 4, **dadurch gekennzeichnet,** daß zur zur Zuführung eines Druckmediums auf die jeweils über einen Kolben 30 betätigbaren Spannbacken (16) Ringkanäle (36, 37) vorgesehen sind, die in Gestalt einer ringförmigen Nut auf einer vom Spannzylinder (14) umgebenen Lagerbuchse (38) angeordnet sind.

6. Verfahren zum Betreiben einer Vorrichtung zum Auftrennen eines Rohres (2) an seinem Innenumfang, die einen in das Rohr (2) einführbaren ein innerhalb des Rohres (2) verfahrbaren Manipulator (6) umfaßt, der an der Rohrinnenwand feststellbar ist und an dem ein senkrecht zur Rohrachse (4) zustellbarer und um die Rohrachse (4) drehbarer Fräskopf (10) mit einem Fräswerkzeug (11) zum Auffräsen des Rohres (2) am Innenumfang angeordnet ist,
**dadurch gekenzeichnet,** daß die zur Drehbewegung und zur Zustellbewegung des Fräskopfes (10) erforderlichen Antriebsmomente zum Manipulator (6) durch biegsame Wellen (24 bzw. 26) übertragen werden.

## Claims

1. An arrangement, for cutting up a pipe (2) from the inside, having the following features:
a) the arrangement comprises a manipulator (6) which can be introduced into the pipe (2), can be moved inside the pipe (2) and can be fixed on the inner wall of the pipe,
b) the manipulator (6) contains a milling head (10) which can be advanced perpendicularly relative to the axis (4) of the pipe, can be rotated about the axis (4) of the pipe and has a milling cutter (11),
characterised in that
c) flexible shafts (24 and 26) are provided for transmitting, to the manipulator (6), the driving moments required for rotational motion and the advancing movement of the milling head (10).

2. An arrangement according to claim 1, characterised in that the manipulator (6) is provided with a hydraulic motor (21) for driving the milling cutter (11).

3. An arrangement according to one of the preceding claims, characterised in that an end-mill cutter is provided as a milling cutter (11).

4. An arrangement according to one of the preceding claims, characterised in that a clamping cylinder (14) having several hydraulically operable clamping jaws (16) is provided for the purpose of fixing the manipulator (6).

5. An arrangement according to claim 4, characterised in that ring channels (36, 37), which are arranged in the form of an annular groove on a bearing bush (38) which is surrounded by the clamping cylinder (14), are provided for the purpose of supplying a pressure medium to the clamping jaws (16), each of which can be operated by way of a piston (30).

6. A method for operating an arrangement for cutting up a pipe (2) from the inside, which arrangement comprises a manipulator (6) which can be introduced into the pipe (2), can be moved inside the pipe (2), can be fixed on the inner wall of the pipe and on which there is arranged a milling head (10) which can be advanced perpendicularly relative to the axis (4) of the pipe, can be rotated about the axis (4) of the pipe and has a milling cutter (11) for cutting up the pipe (2) from the inside, characterised in that the driving moments required for rotational motion and the advancing movement of the milling head (10) are transmitted to the manipulator (6) by means of flexible shafts (24 and 26).

## Revendications

1. Dispositif de sectionnement d'un tube (2) à la périphérie intérieure, comportant les caractéristiques suivantes :
a) le dispositif comprend un manipulateur (6) susceptible d'être introduit dans le tube (2) ainsi que d'être déplacé à l'intérieur du tube (2) et d'être fixé sur la paroi intérieure du tube,
b) le manipulateur (6) est doté d'une tête de fraisage, comportant un outil de fraisage (11), susceptible d'être avancée perpendiculairement à l'axe (4) du tube et d'être mise en rotation autour de l'axe (4) du tube,
caractérisé en ce que
c) des arbres souples sont prévus en vue du transfert au manipulateur des couples d'entraînement indispensables pour le déplacement rotatif de la tête de fraisage (10) ainsi que pour le déplacement d'avance de celle-ci.

2. Dispositif selon la revendication 1, caractérisé en ce que le manipulateur (6) est muni d'un moteur hydraulique (21) en vue de l'entraînement de l'outil de fraisage (11).

3. Dispositif selon l'une des revendications précédentes, caractérisé en ce qu'une fraise à queue qui est prévue en tant qu'outil de fraisage (11).

4. Dispositif selon l'une des revendications précédentes, caractérisé en ce qu'un vérin de blocage (14) comportant plusieurs mâchoires de blocage (16) susceptibles d'être actionnées hydrauliquement est prévu en vue de fixer le manipulateur (6).

5. Dispositif selon la revendication 4, caractérisé en ce que des canaux annulaires (36, 37) qui sont disposés en forme de gorge annulaire sur un manchon (38) de support entouré par le vérin de blocage (14), sont prévus pour amener un fluide sous pression sur les mâchoires de blocage (16) susceptibles d'être actionnées chacune par un piston (30).

6. Procédé pour faire fonctionner un dispositif destiné au sectionnement d'un tube (2) sur sa périphérie intérieure, qui comprend un manipulateur (6) susceptible d'être introduit dans le tube (2) et d'être déplacé à l'intérieur du tube (2), qui peut être fixé sur la paroi intérieure du tube et sur lequel est disposée une tête de fraisage (10) mobile susceptible d'être avancée perpendiculairement à l'axe (4) du tube et d'être mise en rotation autour de l'axe (4) du tube, comportant un outil de fraisage (11) destiné à fraiser le tube (2) sur sa périphérie intérieure, caractérisé en ce que les couples d'entraînement nécessaires au déplacement en rotation sont transmis au manipulateur (6) par des arbres souples (24 ou 26).
